# EUROPEAN PATENT APPLICATION

(11) **EP 0 525 712 A2**
(43) Date of publication of application: **03.02.1993**
(21) Application number: 92112843.5
(22) Date of filing: 28.07.1992
(51) Int. Cl.: G06F 3/023, G06F 9/44

(54) **Message editor for an operator workstation**

(30) Priority: 29.07.1991 US 737008
(71) Applicant: Bull HN Information Systems Inc., Billerica, MA 01821-4186 (US)
(72) Inventor: Hockley, Roger W., Glendale, Arizona (US)
(74) Representative: Altenburg, Udo, Dipl.-Phys.

(57) **Abstract**

A message definition process, implemented in a system operator workstation and invocable by the operator, for displaying successive screens and providing the facility for interacting therewith in order to identify and define a message to be displayed in a Special Window and/or responded to. Defined messages are saved in a Pattern File. Subsequently, as messages are received during normal operation, they are compared to defined messages stored in the Pattern File to determine if each given received message matches the pattern of a defined message. If so, the defined display is presented and/or the defined action is taken for that message match.

## Description

### Field of the Invention

This invention relates to the art of digital computing and, more particularly, to the exchange of information between the Host Operating System and the operating console of a computer system. Still more specifically, this invention relates to a message editor for a workstation employed as a system console.

### Background of the Invention

Traditionally, a mainframe computer system has included an operator console from which an operator or a technician can interact with the system for such purposes as monitoring the system performance and condition, carrying out routine tasks required by the system during normal operation, maintaining the system, etc. In the past, these operator consoles have usually been custom hardware integrated into the mainframe system. More recently, some operator consoles have been implemented using commercially available personal computers or workstations which are the more powerful siblings of personal computers. In this specification, the term "workstation" will be understood to also comprehend a personal computer since the subject matter of this invention can be implemented on either.

In monitoring and tending to a mainframe computer system from an operator workstation (OPWS), an operator receives numerous messages from the system which are displayed on the OPWS. It may be desirable for the operator to "keep on display" certain messages until some specified event occurs. For example, the operator might want to keep all ^{*}GET TAPE messages for a "job" displayed until the job has started.

In accordance with the present invention, the operator is empowered to define which Host Operating System (HOS) messages will be kept on display until a specified event occurs and also to define specific actions (e.g.: sound an alarm, suppress a message, display a message in a specified color, customize a message, specify an automatic reply to a message) to be taken when the defined message is detected.

### Objects of the Invention

It is therefore a broad object of this invention to provide improved communications between a mainframe computer system and a system operator.

It is a more specific object of this invention to provide an operator workstation which includes the facility to define system originated messages which are to be displayed, and how they are to be displayed, on the screen of the operator workstation until a specified event occurs.

In another aspect, it is another more specific object of this invention to provide an operator workstation which includes the facility to define system originated messages which are to be responded to by a defined specific action.

It is a further object of this invention to provide a process for effecting the above objects in simple and logical steps employing successive "Pattern Editor" screens.

### Summary of the Invention

Briefly, these and other objects of the invention are achieved by a message definition process, implemented in the system operator workstation and invocable by the operator, for displaying successive screens and providing the facility for interacting therewith in order to identify and define a message to be displayed and/or responded to. Defined messages are saved in a Pattern File. Subsequently, as messages are received during normal operation, they are compared to defined messages stored in the Pattern File to see if each given received message matches the pattern of a defined message. If so, the defined display is presented and/or the defined action is taken for that message match.

### Description of the Drawing

The subject matter of the invention is particularly pointed out and distinctly claimed in the concluding portion of the specification. The invention, however, both as to organization and method of operation, may best be understood by reference to the following description taken in conjunction with the subjoined claims and the accompanying drawing of which:
FIGs. 1 to 38, inclusive, show a successive series of OPWS screens with which an operator interacts to define a message for storage into a Pattern File;
FIG. 39 is a flow chart of the process depicted in FIGs. 1 to 38;
FIG. 40 shows an exemplary screen during normal operation in which a "media dismount" message has been defined and several messages matching the definition have been received; and
FIG. 41 is a flow chart of the normal operation of the OPWS in handling messages from the host when messages have been defined and placed into the Pattern File and messages are being received from the system.

### Description of the Preferred Embodiment(s)

The Operator Workstation (OPWS) is a personal computer or workstation which replaces or supplements the traditional operator console in a mainframe computer system. The OPWS has many functions, but with respect to the subject invention, it can perform a variety of operations on messages coming from the Host Operating System (HOS). Based on what is specified, the OPWS, programmed in accordance with the present invention, can determine which messages to process, which to discard and which need to remain on the screen until some action is taken. The OPWS so programmed is Operating System (OS) independent meaning that it can be used on any OS provided that the rule for signing onto the OS has been previously defined.

Messages are scrolled up and off the screen in accordance with normal practice on previous HOS operator consoles. However, in accordance with the present invention, messages which it is desired to retain on the screen until some specified event occurs can be predesignated. Merely as an example, it might be desired to keep all ^{*}GET tape messages for a given job displayed until that job has started.

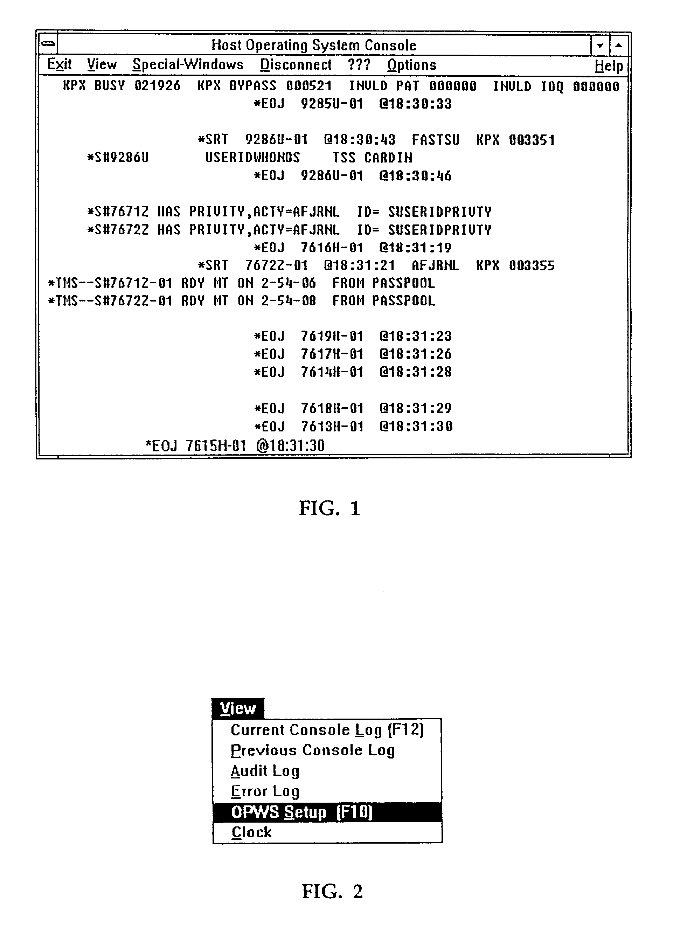

Consider the various screens and processes by which the invention can be used to advantage to accomplish this aim. To begin with, FIG. 1 illustrates an exemplary and presently preferred example of the HOS Console window for the OPWS; i.e., the typical starting screen for utilizing the invention.

### THE SETUP MENU

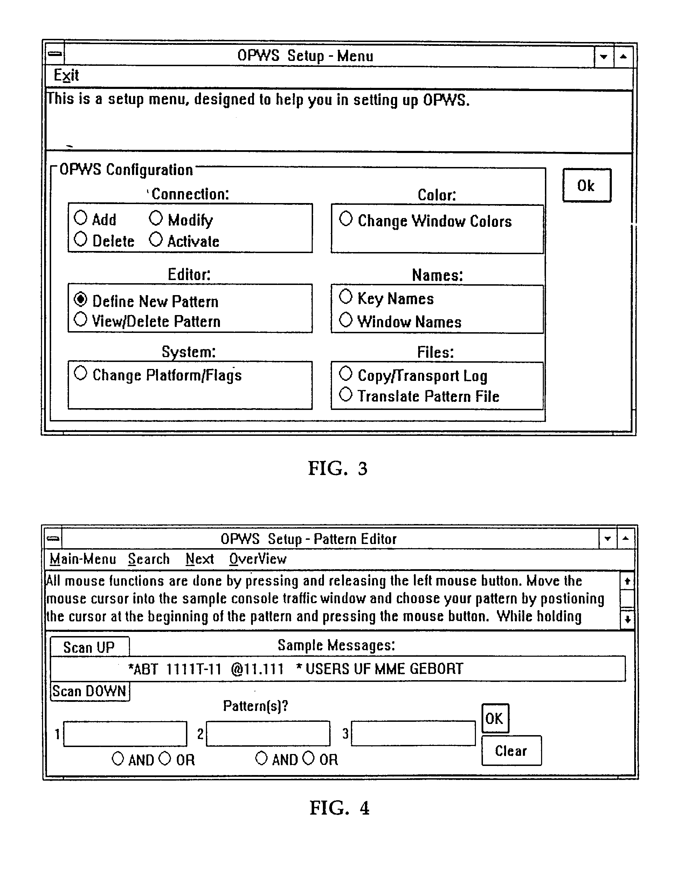

Essential to the operation of OPWS is the setup Menu (FIG. 3) which is invoked by selecting the OPWS Setup item from the View menu item (FIG. 2) of the HOS Console window.. From the Setup Menu, various features of the OPWS can be configured to suit an individual site or user. The various aspects that can be set up include:
Connection - add, delete, modify, or activate a previously defined platform connection.
Editor - define a new pattern or view/delete a previously defined pattern.
System - change the platform and flags of the OPWS that tell it what type of platform it will be running on.
Color - change the window colors.
Names - specify Key Names (labels used by the Pattern Editor) or Window Names (titles for special windows which indicate the type of messages each one contains).
Files - Copy/Transport the master log file to either a sample file for the Pattern Editor, a simulated traffic file for OPWS training or both; also translates the Pattern File which contains the active patterns previously defined by the Pattern Editor, into an AS-CII formatted file.

A new pattern is defined by selecting the Define New Pattern Selection and then OK.

### OVERVIEW OF THE PATTERN EDITOR

Fundamental to the function of the OPWS is the ability to detect specified messages coming from the Host Operating System (HOS) and to perform specified action when such messages are detected. The Pattern Editor is used to define HOS messages of current interest and what actions are to be taken when a specified message is detected. One or more patterns can be defined which will allow unique detection of any HOS message.

The editor flow is as follows:
1. Define one or more patterns which will uniquely identify a HOS message.
2. Specify the action to be taken when this message is detected.

Actions which can be specified include: display the message in one or more Special Windows;
delete all messages from one or more Special Windows which match a specified KEY on a message;
suppress the message; that is, do not display the message;
sound an alarm;
display the message in a specified color;
customize the message;
automatically reply to the message.

When invoking the Pattern Editor from the Setup Menu window, the screen shown in FIG. 4 will appear. The top portion is a HELP window or Guide Box. This window will guide the operator through the steps to be taken to complete the tasks in the Pattern Editor.

In the middle of the screen is the HOS Sample Message file. This is a file of HOS messages which can serve as templates when the operator is defining message patterns. By using these message templates, the operator does not have to be concerned with where in a message a pattern is situated; rather, using a conventional mouse or other pointer, the operator may simply "drag" over the pattern in the template, and the OPWS will calculate the starting column and length.

The bottom portion of the screen shown in FIG. 4 contains one or more dialog boxes. These boxes are where data patterns are entered and/or various choices offered may be selected.

### ACTIONS A MESSAGE CAN TRIGGER

The actions in response to a detected defined message which can be specified include the following:
Add - add this message to a specified Special Window.
Delete - delete all messages from the specified Special Windows whose key values match the key values of this message. (For example, on a typical ^{*}GET TAPE message, if this is a message of type ADD and there is a variable field called SNUMB (key with keyword SNUMB) starting in column 36 whose length is 5 characters, the ^{*}GET TAPE message would be displayed in the Special Window, and the actual value in column 36 for 5 characters in the message would be stored and associated with that message. Again, if a typical ^{*}SRT message, whose snumb starts in column 45 and extends for 5 characters, had been specified to be of type DEL, when a ^{*}SRT message is encountered, that event would cause all messages with the same snumb to be deleted from the Special Window.)
Suppress - suppress this message; throw it away.
Alarm - cause continuous beep when displayed; beep must be reset by the operator.
Customize - change the contents of a message, substituting (if desired) a variable from the original message.
Reply - reply to the detected message automatically.

### SPECIFYING A PATTERN

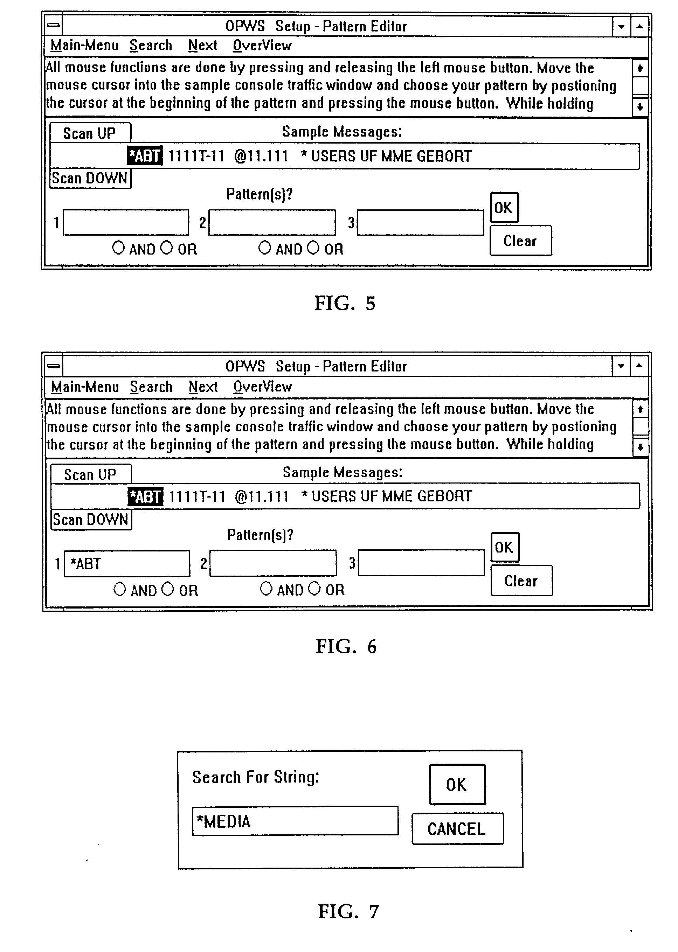

There are two ways to enter a pattern.
1. Type the pattern; or
2. Find the message of interest in the "Sample HOS Message File" and select the pattern from that message; see FIG. 5. To select a message from this file, the operator can drag the mouse on the pattern desired, and it will be copied to the next available "Pattern Box" when the left mouse button is released as shown in FIG. 6. To "drag a pattern", position the cursor on the first character of the text to be selected, click and hold the left mouse button and move the mouse along the message in a rightward direction. As the mouse is moved, the color of the background and text will change. When the end of the text of interest is reached, release the mouse button. FIGs. 5 and 6 illustrate how the ^{*}ABT pattern is moved into Pattern Box number 1 with this method.

### SEARCHING FOR A SAMPLE MESSAGE

A specific message can be searched for in the Sample HOS Message File by selecting the Search menu item on the Editor menu bar at the top of the Pattern Editor screen which will bring up the edit box shown in FIG. 7. In the example, a ^{*}MEDIA message is to be searched for by entering ^{*}MEDIA in the SEARCH FOR STRING box and pressing return or clicking the mouse on OK.

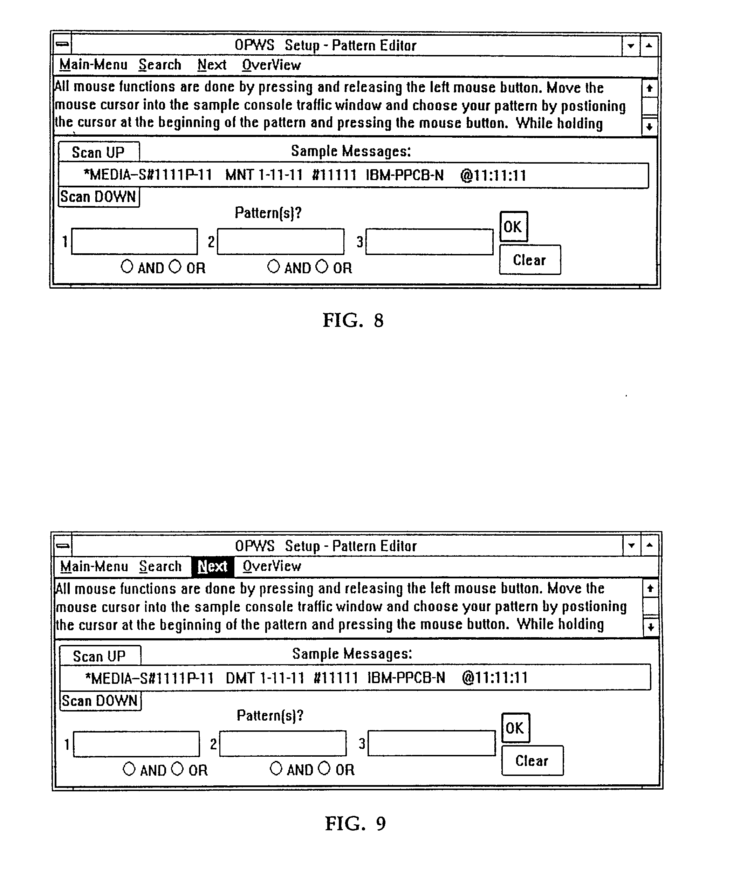

FIG. 8 shows a ^{*}MEDIA message that was searched for. If this is not the desired sample message, the next occurrence of a ^{*}MEDIA message (if one existed) could be found by simply selecting NEXT as shown in FIG. 9. Dragging the mouse on ^{*}MEDIA will transfer ^{*}MEDIA to the pattern box. If one pattern is not enough to uniquely identify the message of interest, one or two additional patterns can be specified in any one message. These patterns can be joined by ANDing or ORing them.
AND - If string 1 AND string 2 BOTH occur in a message, then that message is of interest.
OR - If string 1 OR string 2 occur in a message, then that message is of interest.

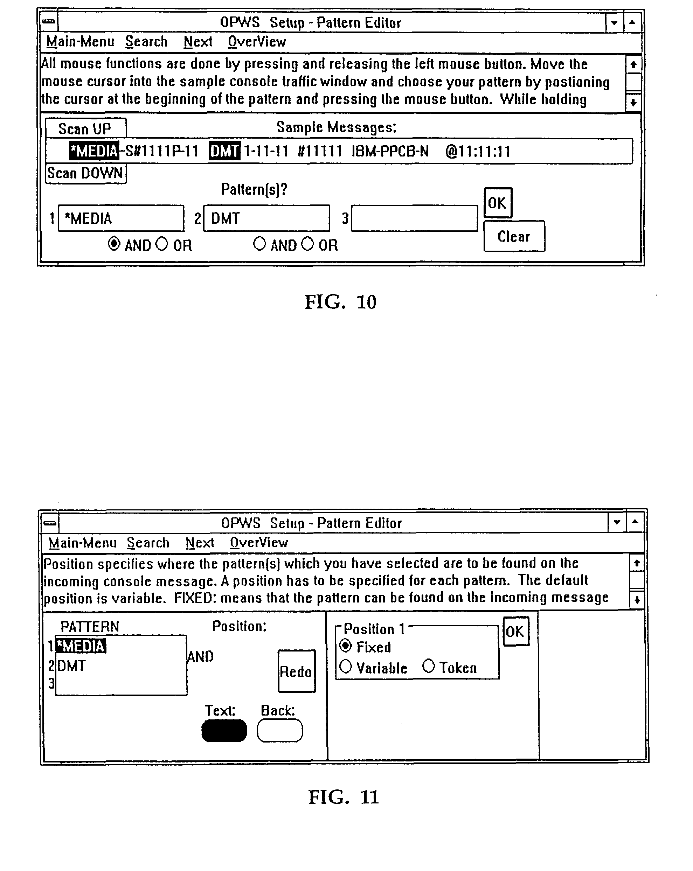

In the example shown in FIG. 10, the message specified includes ^{*}MEDIA AND DMT patterns. Selecting Clear permits clearing any patterns which may have been incorrectly entered. Selecting OK indicates that the operator is ready to proceed.

### SPECIFYING THE POSITION OF A PATTERN

There are several ways in which the position of a pattern in the message can be specified.

Fixed:
The pattern will always appear in a fixed column position.

Variable:
The pattern can occur anywhere in the message; the OPWS must scan the entire message looking for a match.

Variable/Fixed:
The pattern is always in the same position in the message, but the column position is not known. The OPWS scans the entire message looking for the pattern and, when found, it remembers the column position and thereafter regards the pattern as fixed starting in this position. This option is useful when it is known that a pattern is in a fixed position, but that exact column position is not known (or if it may change in a future operating system release). Each time the OPWS is started, this field is recalculated. Thus, this option combines the flexibility of the Variable option and the efficiency of the Fixed option. However, it is not useful if the pattern varies from one occurrence of a message to the next.

Token:
This field is used to locate a variable position attribute. Such a variable position attribute is the snumb on the following example Console Manager message:
»>message 98 snumb 1234t In the example, the position 1234t will vary depending on how many characters are used in the Reply Key (which is the 98 in this example). If it were 456 the 1234t would be one column further on. To get around this problem, the relative position of the snumb can be specified, and this is designated the token position of the snumb. In this context, a token is a word or group of characters which ends with one or more spaces. In the example, snumb variable is token #4. Whenever a message from the sample Message file is used, the operator can drag on that message to specify a token; that is, the token number does not have to be calculated; the OPWS will do it.

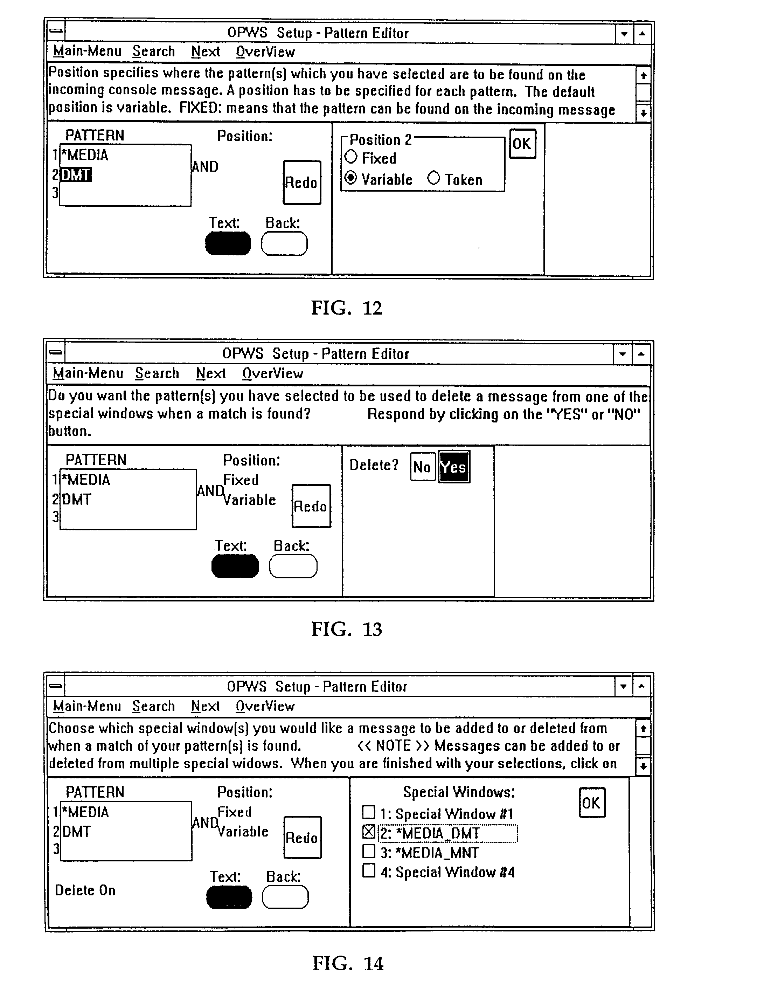

In the example shown in FIG. 11, a Fixed pattern position has been selected for pattern 1, and in the example shown in FIG. 12, a Variable position has been selected for pattern 2. The operator can select OK when ready to proceed.

### USING A MESSAGE AS A DELETE TRIGGER

A message can be used to trigger the deletion of messages from one or more special windows. Assume that it had been specified that all ^{*}SRT messages were to be displayed in Special Window #2. Now, a procedure is needed to delete these messages once they are no longer of interest. There are several ways to do this. One way is to define an ^{*}EOJ message to cause the deletion of all messages for the same snumb from Special Window #2. See FIG. 13. Select YES if the message currently being defined is to act as a delete trigger.

### SPECIFYING A SPECIAL WINDOW

Select the special windows the messages are to be deleted from. Referring to FIG. 14, in our example, it has been specified that the message currently being defined (the ^{*}MEDIA DMT message) will cause all other messages with the same KEY (more on KEYS below) to be deleted from Special Window #2 which is the Media Dismount window. (It will be understood that messages can be placed into more that one special window and that a message can be used to trigger deletion of messages from more than one special window.) Each special window can be given any name the operator likes by using the "Setup Menu - Names" option; in the example, it has been decided to put all media dismount messages into Special Window #2 which has been named ^{*}MEDIA DMT. Note that the current state of the pattern definition is displayed in the Pattern Summary box.

### SELECTING A MESSAGE KEY

A KEY is a message field associated with variable data such as a SNUMB or KPX. When one message is specified to cause the deletion of another message from a special window, those messages which are to be deleted must be specified. For example, when an ^{*}EOJ message is received, the operator might wish to delete all message with the same snumb; thus, the snumb would be the KEY, and it is necessary to specify where the snumb is in the message.

KEYS are specified in much the same way as patterns; i.e., by dragging on the key text in the Sample Message file or by typing it in. The KEY field contains variable information (snumb, tape drive, KPX#, etc.) which varies from one message to another. However, the OPWS is not interested in the actual key text as this contains variable information; rather, the OPWS examines the starting position column and the length of the field. First, the key type is specified and then the key position is specified.

### SPECIFYING A KEY TYPE

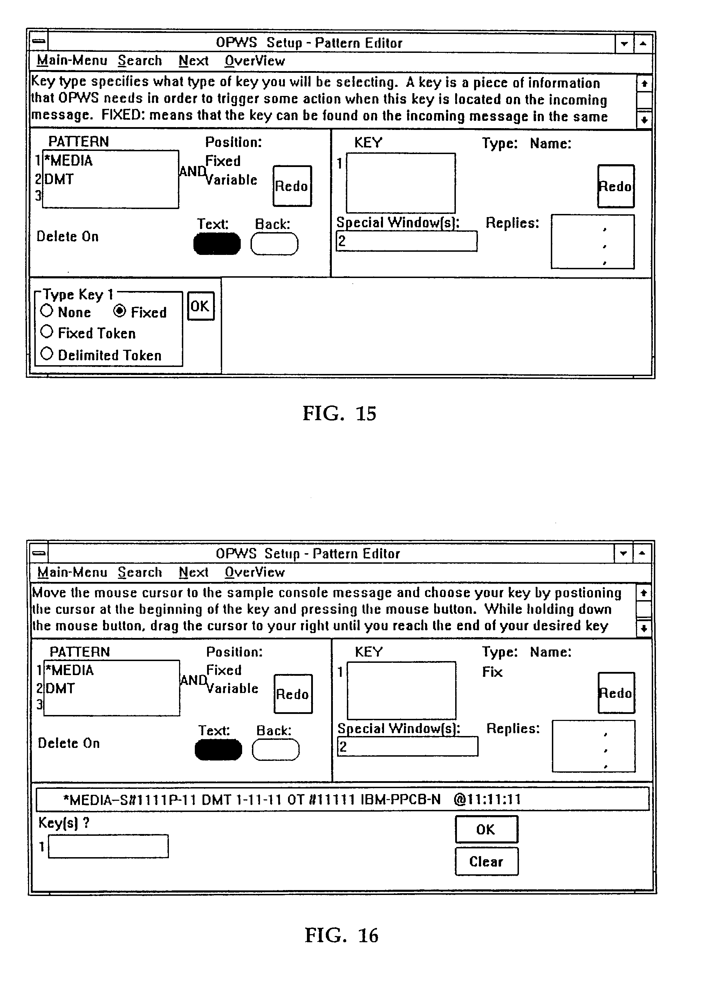

Referring to FIG. 15, there are several choices: None:
No key is specified.

Fixed:
Specify the starting position of the key; if specified, the starting position will be taken from the Sample HOS Messages file entry.
Fixed Token Specify the token number of the KEY and key length. These are calculated by OPWS based on what you drag on.
Delimited Token -
Specify the token number of the KEY and character which terminates the token. These are calculated by the OPWS based on what is dragged on.
When the Key Type has been specified, select OK to continue.

### SPECIFYING A KEY POSITION

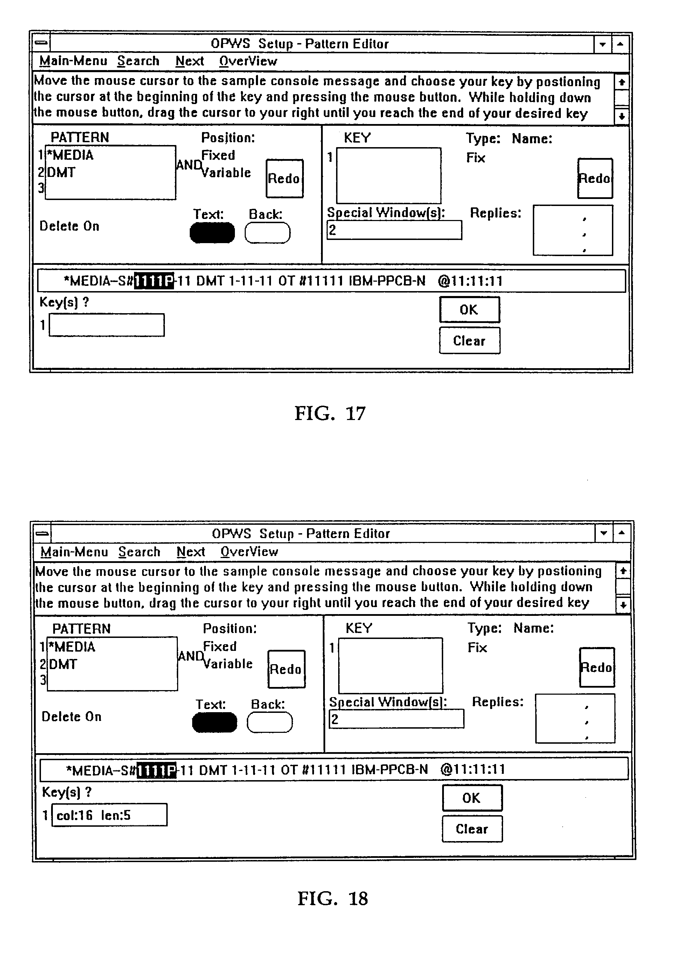

Referring to FIG. 16, the original message from the Sample Message file is displayed (if the pattern was dragged from the sample file). Specify the KEY by dragging on it with the mouse as shown in FIG. 17. Otherwise, enter the starting column number of the key and its length. The starting column and KEY length will appear in the KEY box as shown in FIG. 18. Select OK when the KEY has been correctly specified. Note that Clear allows restarting the key selection process.

### SPECIFYING A KEY NAME

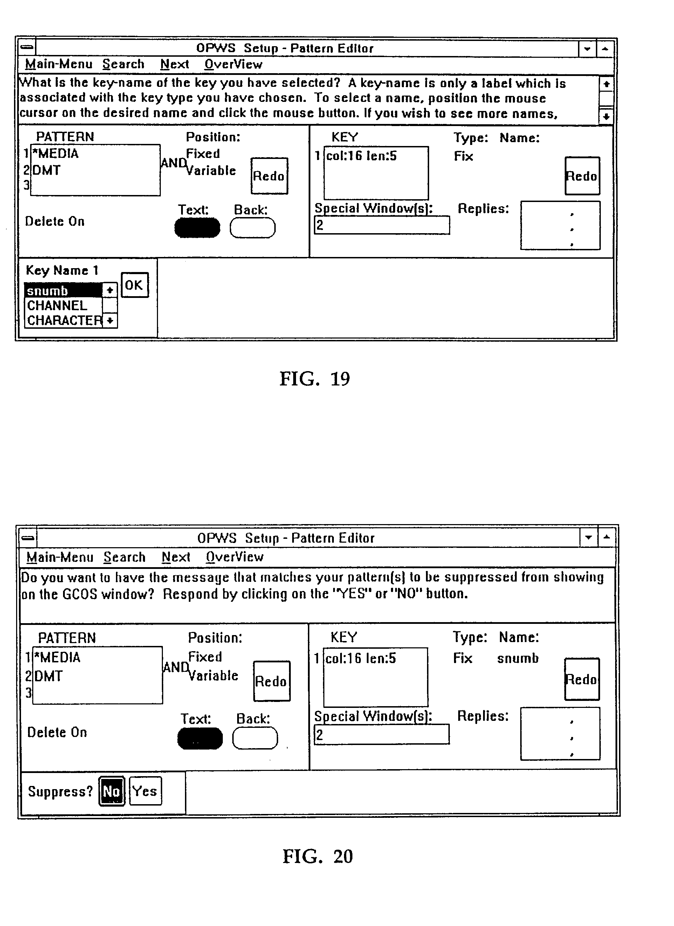

Referring to FIG. 19, press enter or click OK to specify that the KEY is a snumb. Assume that when an ^{*}SRT message is received from the HOS, it is desired to delete all ^{*}GET messages for the same job from a given Special Window. In the ^{*}SRT message, the snumb would be specified as a KEY named SNUMB. Similarly, in the ^{*}GET message, the snumb would be specified as a KEY named SNUMB. In this way, the ^{*}SRT message could cause the ^{*}GET messages with the SAME snumb to be deleted.

It will be noted that the KEYs can be in different positions in different message. However, KEYs of the same name, such as snumb keys, must be of the same length. KEY names are defined using the Names function from the Setup Menu window discussed earlier. The OPWS supplies ten keys which are initially named KEY1 through KEY10. By using the Setup Menu, these key names can be individually changed to something more meaningful. (A commonly used key name would be SNUMB.) Key names have no intrinsic meaning but are merely used to associate keys in different messages.

### SUPPRESSING A MESSAGE

Referring to FIG. 20., if it is desired to discard any messages from the HOS window which match the current pattern, select Yes; otherwise select No. A discarded message will not appear in the HOS Console window. It may or may not appear in a Special Window depending upon whether or not it has been specified that it should be displayed in (or added to) a given Special Window. However, the message is still logged in the log file.

### SOUNDING AN ALARM

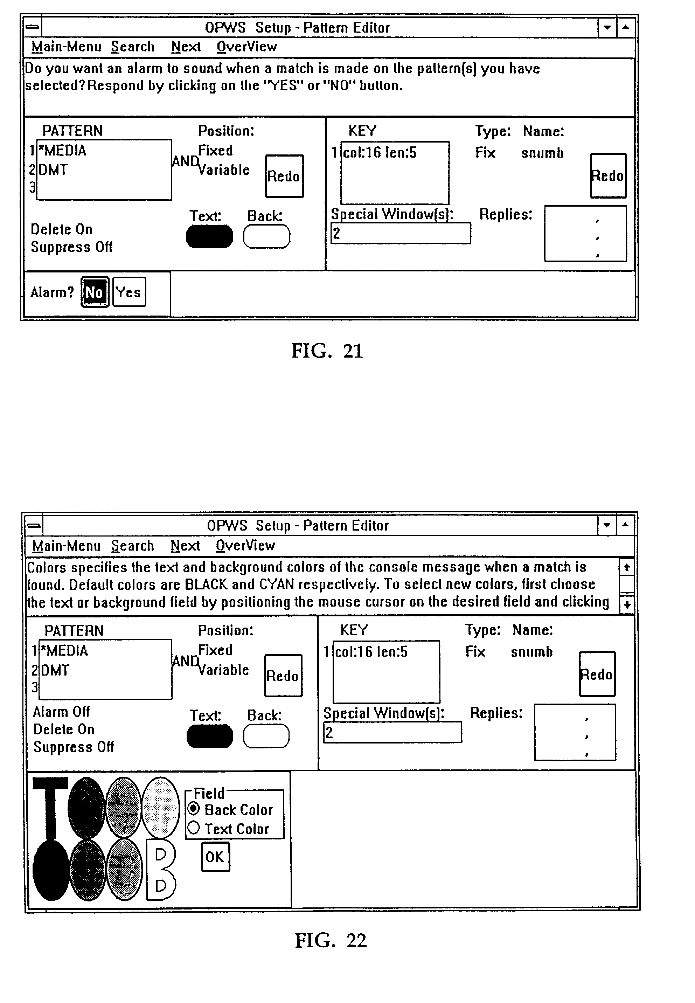

Referring to the next screen which is shown in FIG. 21, select Yes if it is desired that an alarm be sounded by a message which matches the message being defined; otherwise, select No.

### COLORING A MESSAGE

It is possible to specify the color of both the message text and its background. Referring to FIG. 22, to change the color of the message text, select Text Color and designate an appropriate color from the selection offered (in the lower left corner of FIG. 22 in which the vertically oriented ovals are colored according to the available selections); this choice is represented by the capital "T" which stands for "text". Similarly, to change the color of the background, select Back Color and designate an appropriate color from the selection offered; this choice is represented by the capital "B" (in place of "T") which stands for "background". The colors selected will be displayed in the pattern summary box. The same color cannot be used for both text and background. OK is selected to proceed.

### CUSTOMIZING A MESSAGE

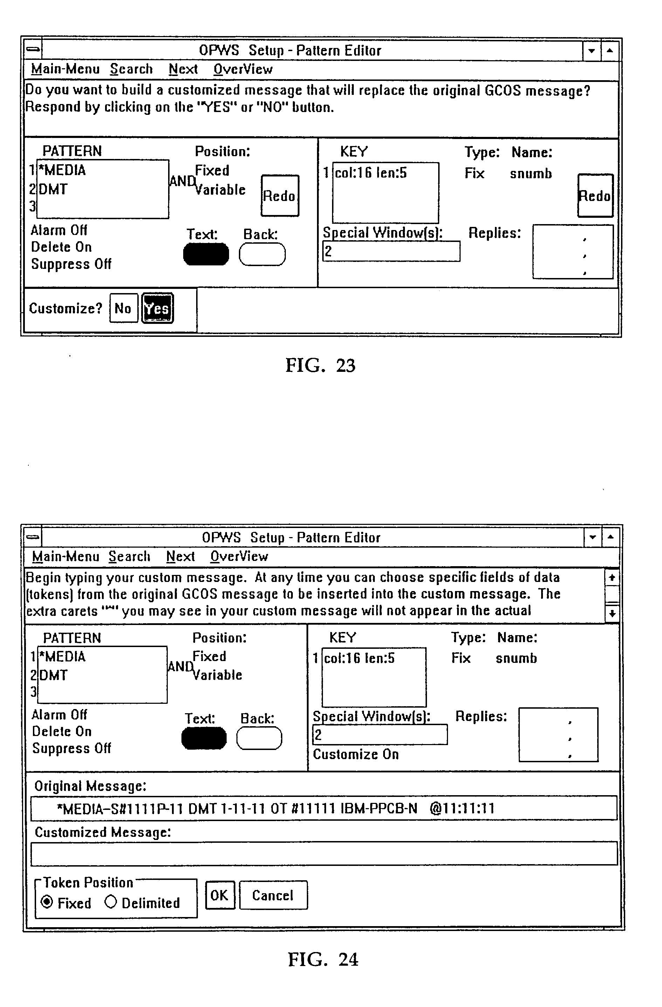

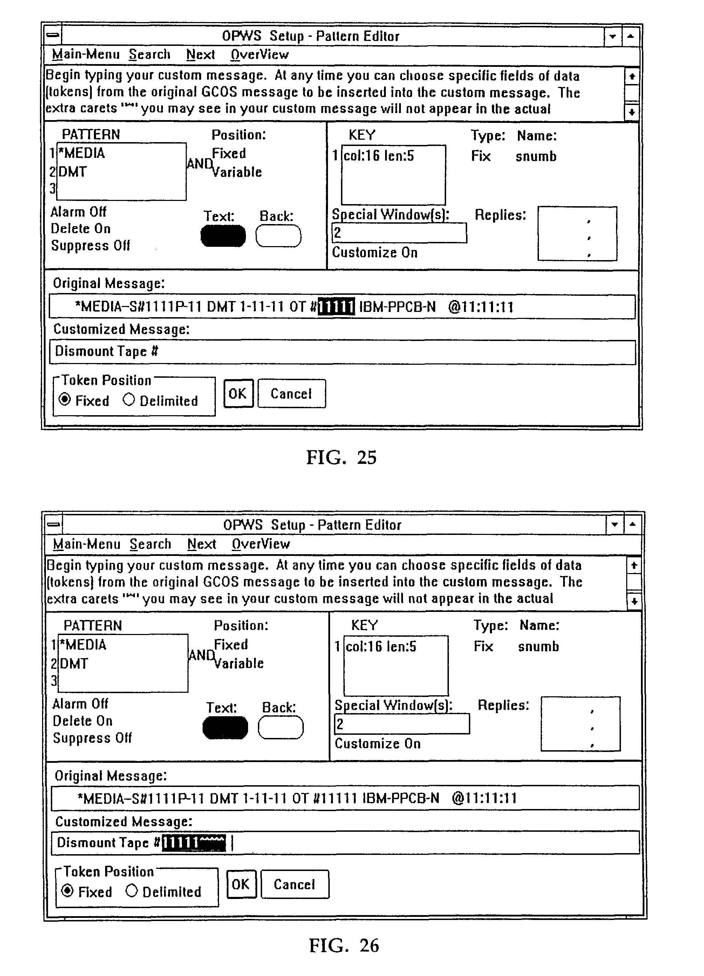

This option, invoked by clicking on Yes in the screen shown in FIG. 23 to bring up the screen shown in FIG. 24, permits a message to be "customized"; i.e., the operator's own message can be substituted for a HOS message. Variable information - such as the snumb, KPX, tape number, etc. - can be copied from the original HOS message and placed whereever desired in the custom message. As shown in FIG. 25, the custom message can be typed in, and, as shown in FIG. 26, information in the original message can be dragged into the custom message with the mouse.

### SPECIFYING A MESSAGE REPLY

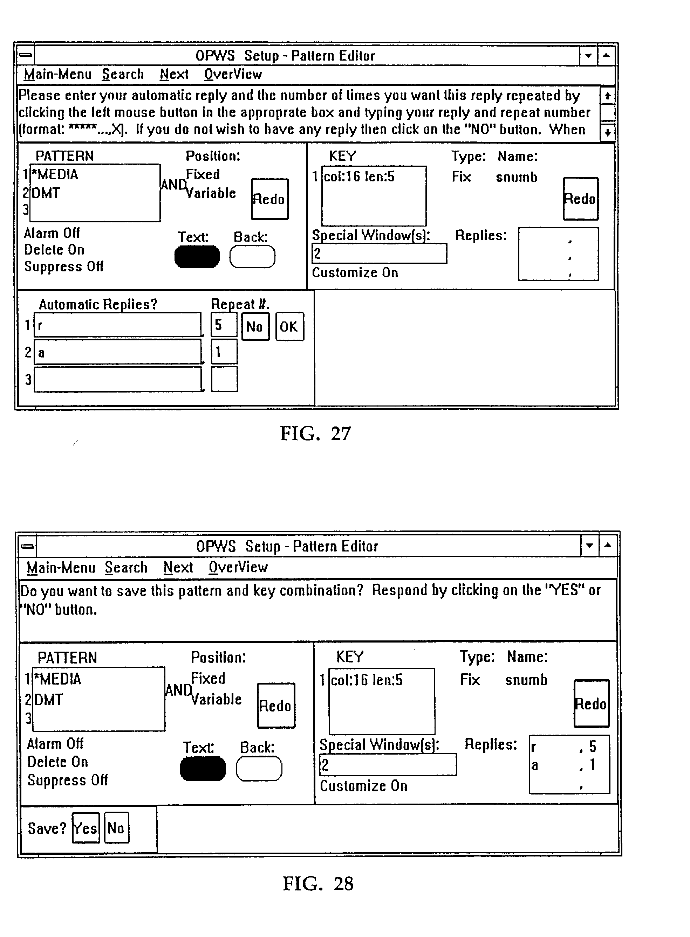

Referring to FIG. 27, up to three replies to a message can be specified, and it is further possible to further specify how many times each reply is to be repeated before proceeding to the next reply. When all the automatic reply possibilities have been exhausted, the message will be treated as if the automatic reply option had not been specified, and the message will require the operator to respond. In the example shown, it has been specified that r is to respond to the message five times followed by one response of a. If no automatic reply is desired, select No. If an automatic reply is desired, type in the reply and the repeat number, as indicated in the example and select OK.

### SAVING A MESSAGE PATTERN

At the conclusion of the foregoing operations, the definition of a pattern has been completed. This definition is saved in the Pattern File by selecting Yes on the screen shown in FIG. 28. If it is desired to discard the defined patter, select No.

### REVISING A MESSAGE PATTERN

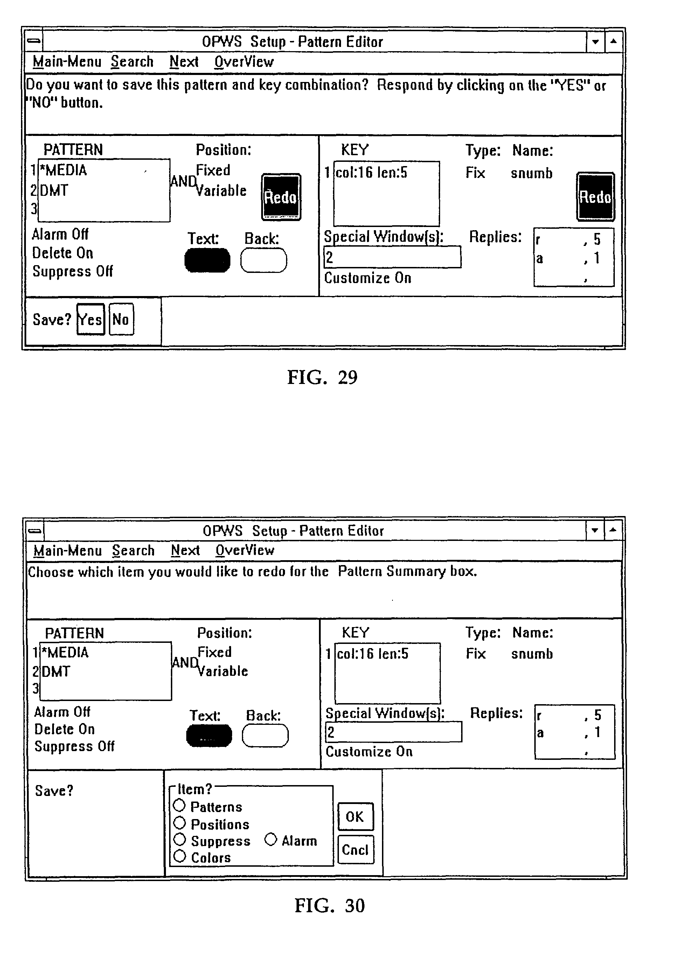

During the course of defining the message pattern, any part of the message pattern that has already been defined can be revised by clicking either of the Redo buttons in the summary boxes; see FIG 29. When the Redo button in the Pattern summary box is chosen, the operator is presented with a group of items from which the item to be revised can be selected as shown in FIG. 30. It will be noted in FIG. 30 that the Redo buttons are no longer visible, but they will return when the current revision operation has been completed. Also, when the revision operation has been completed, the sequence of operation will be returned to the screen shown in FIG. 28; i.e., the operator will be returned to the Save? question and will have to answer it. Click OK when an item to revise has been chosen or click Cncl to return without performing a redo operation.

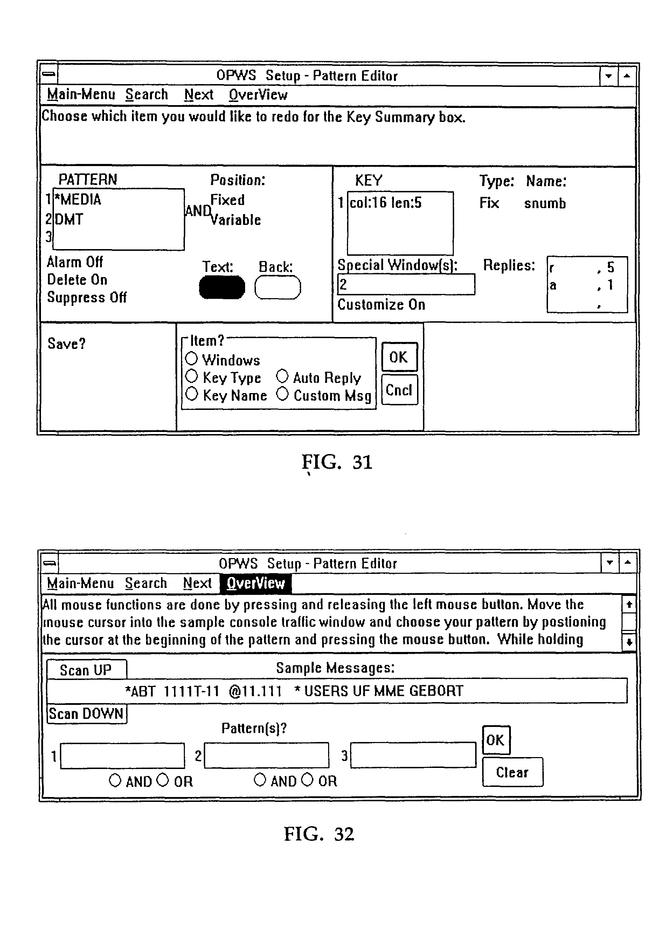

Referring to FIG. 31, when the Redo button in the Key summary box is chosen, the operator is again presented with a group of items from which the item to revise can be chosen. Thereafter, the same sequence is followed as previously describe for the screen of FIG. 30.

### THE OVERVIEW MENU

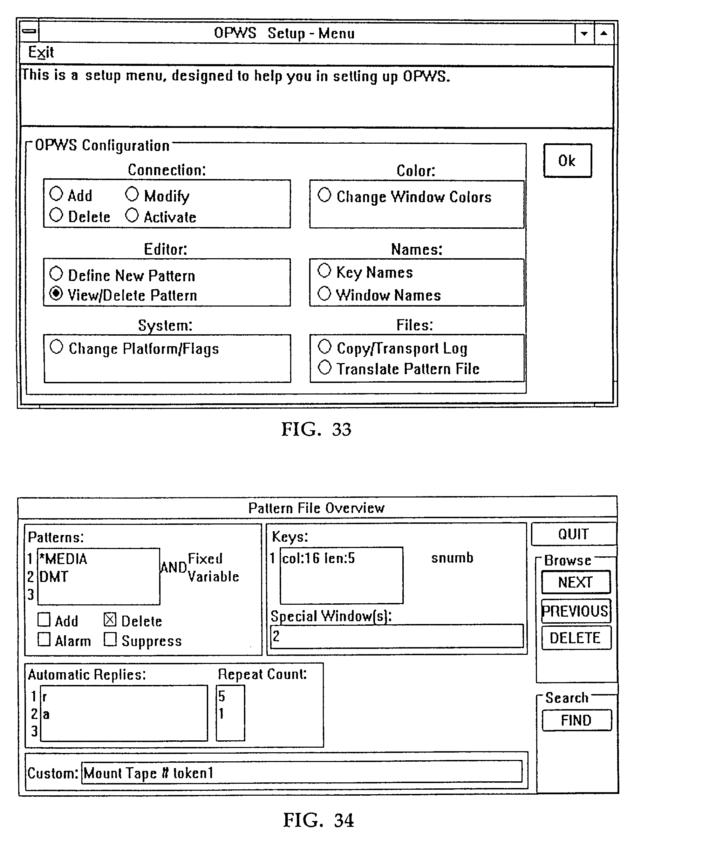

The Overview option is available anytime during the process of defining a pattern. This option can be selected from the menu bar as shown in FIG. 32 or from the Setup Editor as shown in FIG. 33. The Pattern File Overview window is shown in FIG. 34. The Overview feature allows the operator to display and delete patterns which have previously been defined. The following options are available:
Next: Display the next Pattern record. (This option does not appear if there are no more patterns; i.e., if at the end of the file.)
Previous: Display the previous Pattern record. (This option does not appear if there are no previous patterns; i.e., if at the beginning of the file.)
Delete: Delete the currently displayed pattern record and then display the next pattern record.
Find: Find a Pattern containing a specified string.
Next: Find the next pattern containing the specified string. (This option does not appear if there are no more patterns containing the specified string.)
Prior Find the previous Pattern containing the specified string. (This option does not appear if there are no more previous patterns containing the specified string.)
Quit: Exit the Overview window.

### SEARCHING FOR A SPECIFIED STRING IN A PATTERN

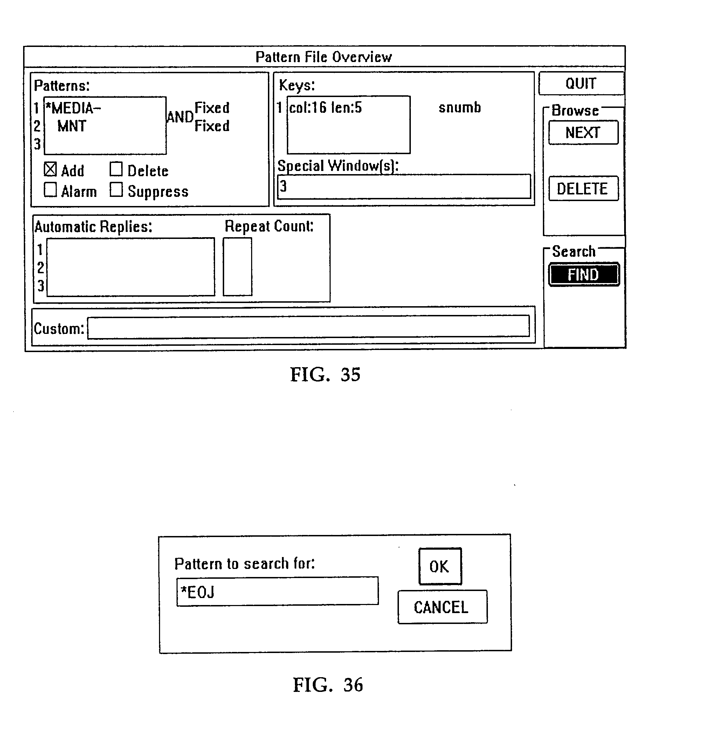

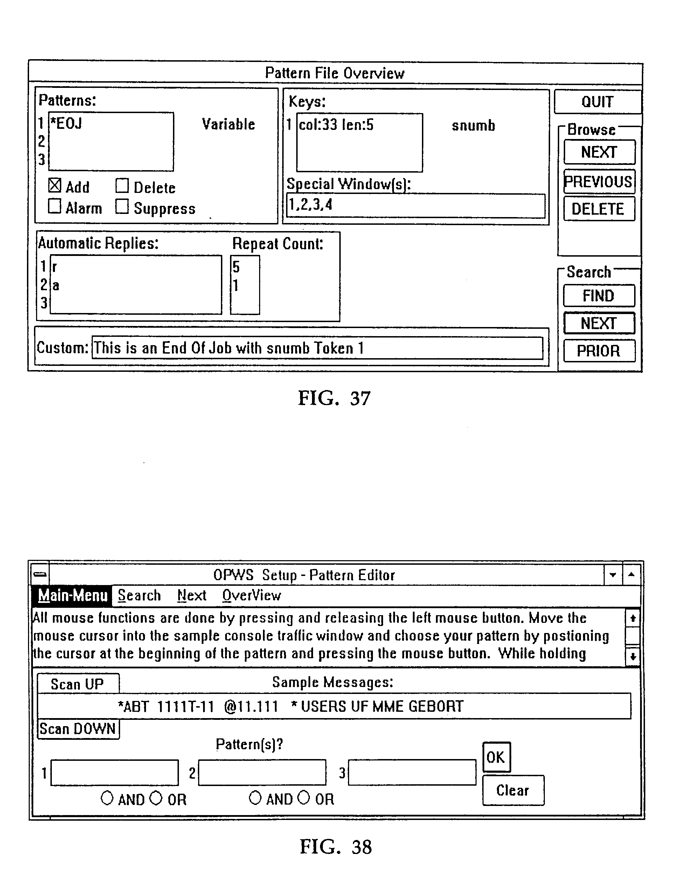

A specific string in a pattern in the Pattern File can be searched by selecting the Find button as shown in FIG. 35 which will bring up the edit box shown in FIG. 36. In the example, the search is for an ^{*}EOJ message; enter ^{*}EOJ and select OK. The result of a successful search for a specified string is a pattern as shown in FIG. 37. The overview display is updated to show the pattern definition. It will be noted that the options of NEXT and PRIOR are now available indicating that there are other strings matching the one specified.

### EXITING THE PATTERN EDITOR

When a pattern definition has been defined and saved, the process will return to the opening window, ready to define another pattern as indicated above. Referring to FIG. 38, if there is no wish to define another pattern, then the Main-Menu option of the menu bar is selected to bring up a box for selecting whether the pattern file is to be activated (but only if a pattern definition has been saved in the Pattern File.) Selecting Yes will automatically activate the new Pattern File; selecting No will not activate the new Pattern File. Regardless of the selection, the process will return to the Setup Menu window shown in FIG. 3 from which normal operation can be resumed.

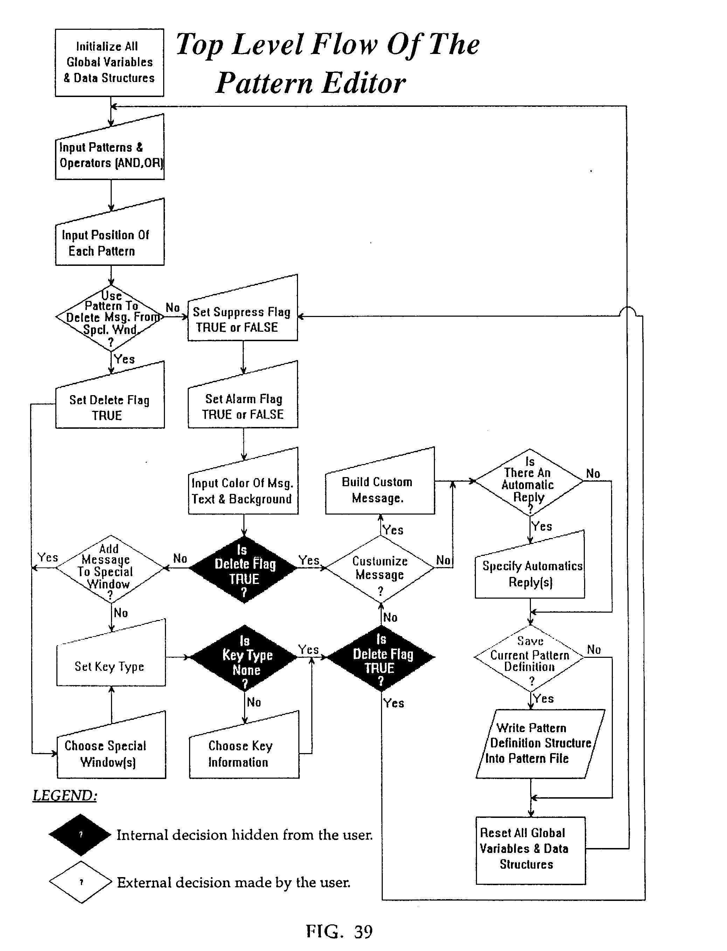

FIG. 39 is a flow chart providing an alternative exposition of the message pattern definition process which can, of course, be implemented by steps and screens other than that employed in the presently preferred embodiment set out above. FIG. 39, however, represents the current best mode of the invention and directly corresponds to the description set forth above in conjunction with FIGs. 1 - 38.

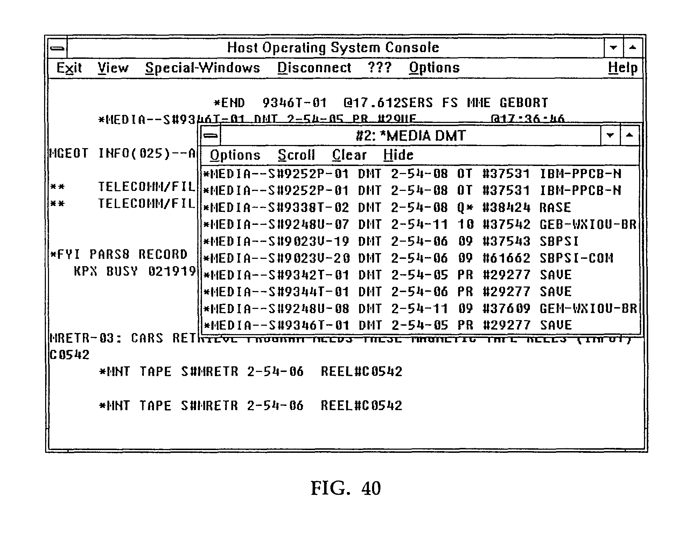

Fig. 40 shows a screen display (in Special Window #2) of the OPWS which is invoked during normal operation and in which a "media dismount" message has been previously defined and placed in the Pattern File and several such messages have been received. Each of these messages is permanently present in Special Window #2 until it is deleted by another message received from the host. Thus, the defined messages and the status of the remaining activities they represent can be dynamically monitored.

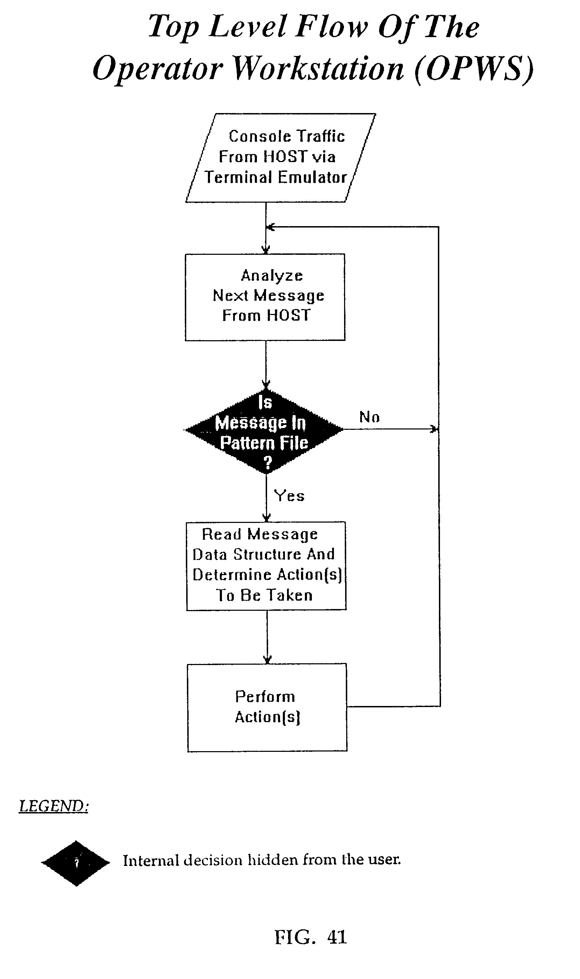

Referring now to FIG. 41, there is presented a flowchart revealing the manner in which messages received by the OPWS during system operation are processed in accordance with the presently preferred embodiment to determine if any match a definition currently stored in the Pattern File and to process any such matches as specified. Briefly, each message received from the host is checked against the message patterns stored in the Pattern File. If there is no match, the message is handled routinely. If there is a match, the specified actions are determined and carried out.

Thus, while the principles of the invention have now been made clear in an illustrative embodiment, there will be immediately obvious to those skilled in the art many modifications of structure, arrangements, proportions, the elements, materials, and components, used in the practice of the invention which are particularly adapted for specific environments and operating requirements without departing from those principles.

## Claims

1. A method for defining, displaying and responding to messages received from a host computer system to a workstation employed as a console for the computer system; which method comprises:
A) determining the patterns of a message to be defined;
B) defining the message by:
1) specifying the position of each pattern in a defined message;
2) specifying the logical relationship between the patterns in a defined message;
3) specifying a special window in which a received message matching a defined message is to be displayed; and
4) specifying action to be taken when a message matching a defined message is received;
C) storing the defined message in a pattern file;
D) comparing each message received from the host to see if such received message matches the defined message stored in the pattern file; and
E) if such received message matches the defined message stored in the pattern file:
1) displaying such received message in the specified special window; and
2) carrying out the action specified for such received message.

2. The method of claim 1 in which, during step B), the following substep is also performed: specifying whether a received message matching a defined message is to be used to delete a message displayed in the specified special window.

3. The method of claim 1 in which, during step B), the following substep is also performed: specifying whether an automatic reply is to be issued when a message matching a defined message is received from the host.

4. The method of claim 1 In which, during step B), the following substep is also performed: specifying a custom message to replace the message received from the host.

5. The method of claim 1 in which, during step B), the following substep is also performed: specifying a key to trigger a predetermined action if the key is present in a received message.
